# EUROPEAN PATENT APPLICATION

(11) **EP 4 629 427 A1**
(43) Date of publication of application: **08.10.2025**
(21) Application number: 23940498.1
(22) Date of filing: 15.12.2023
(51) Int. Cl.: H01M 50/457, H01M 50/446, H01M 10/0525

(54) **SEPARATOR AND PREPARATION METHOD THEREFOR, SECONDARY BATTERY AND ELECTRIC DEVICE**

(30) Priority: 08.06.2023 CN 202310678193
(71) Applicant: Contemporary Amperex Technology Co., Limited, Ningde, Fujian 352100 (CN)
(72) Inventor: MU, Xueying, Ningde, Fujian 352100 (CN); YANG, Jianrui, Ningde, Fujian 352100 (CN); SUN, Chengdong, Ningde, Fujian 352100 (CN); OUYANG, Chuying, Ningde, Fujian 352100 (CN); HUANG, Siying, Ningde, Fujian 352100 (CN)
(74) Representative: Thoma, Michael
(86) International application number: PCT/CN2023/139227
(87) International publication number: WO 2024/250624

(57) **Abstract**

This application relates to a separator and a preparation method thereof, a secondary battery (5), and an electric apparatus. The separator includes a first base film, a second base film, and an intermediate layer provided between the first base film and the second base film. The intermediate layer includes ceramic particles and polymer particles. The separator has a sandwich composite structure capable of preventing detachment of the intermediate layer, exhibits good mechanical strength, and enables pore closure under overheating conditions, significantly reducing the probability of thermal runaway of the battery under abnormal high-temperature conditions.

## Description

### CROSS-REFERENCE TO RELATED APPLICATIONS

This application claims priority to Chinese Patent Application No. 202310678193.5, filed on June 8, 2023, and entitled "SEPARATOR AND PREPARATION METHOD THEREOF, SECONDARY BATTERY, AND ELECTRIC APPARATUS", which is incorporated herein by reference in its entirety.

### TECHNICAL FIELD

This application relates to the technical field of secondary batteries, and specifically to a separator and a preparation method thereof, a secondary battery, and an electric apparatus.

### BACKGROUND

In recent years, with increasingly wide use of secondary batteries, secondary batteries have been widely used in energy storage power supply systems such as hydroelectric, thermal, wind, and solar power plants, and many other fields including power tools, electric bicycles, electric motorcycles, electric vehicles, military equipment, and aerospace.

In the battery structure, a separator is located between a positive electrode plate and a negative electrode plate, primarily configured to separate the positive electrode plate from the negative electrode plate to prevent short circuits due to contact between the two electrodes. Currently, commonly used for polyolefin separators, when a short circuit or other abnormality occurs in the battery, the internal temperature of a cell rises sharply, which can lead to melting and rupture of the separator, easily resulting in thermal runaway. In the prior art, a ceramic coating is often provided on a surface of the separator to improve the thermal stability and mechanical strength of the separator. However, defects such as easy detachment of a ceramic layer and insufficient safety performance under abnormal high-temperature conditions still exist.

### SUMMARY

This application is intended to provide a separator and a preparation method thereof, a secondary battery, and an electric apparatus, where the separator has a multilayer composite structure capable of preventing detachment of an intermediate layer, exhibits good mechanical strength, and enables pore closure under overheating conditions, significantly reducing the probability of thermal runaway under abnormal high-temperature conditions.

To this end, according to a first aspect, this application provides a separator including a first base film, a second base film, and an intermediate layer. The intermediate layer is provided between the first base film and the second base film. The intermediate layer includes ceramic particles and polymer particles.

By providing the intermediate layer including the ceramic particles and polymer particles between two layers of the separator, a composite separator with a sandwich structure is formed, effectively preventing the problem of easy detachment of the ceramic particles and polymer particles. Furthermore, the separator provided by this application also exhibits good mechanical strength and is capable of pore closure under overheating conditions, significantly reducing the probability of thermal runaway under abnormal high-temperature conditions.

In any embodiment, a porosity of the first base film is greater than a porosity of the second base film.

Under the condition that two base films with different porosities are stacked together, the problem of mutual-fiber pore clogging is less likely to occur, thereby facilitating good air permeability of the separator. Moreover, this helps to enhance the overall mechanical properties of the separator.

In any embodiment, a ratio of the porosity of the first base film to the porosity of the second base film is greater than or equal to 1.02.

Under the condition that a slight difference exists between the porosity of the first base film and the porosity of the second base film, for example, a ratio of 1.02 or higher, a certain good technical effect can be achieved in improving the overall air permeability of the separator.

In any embodiment, the porosity of the first base film is 30% to 80%.

In any embodiment, the porosity of the second base film is 30% to 70%.

In any embodiment, a thickness of the first base film is greater than a thickness of the second base film.

When the porosity of the first base film is greater than the porosity of the second base film, the thickness of the first base film is greater than the thickness of the second base film, so that the first base film having a relatively loose structure has a greater thickness, which is conducive to ensuring that the separator has good mechanical strength.

In any embodiment, a ratio of the thickness of the first base film to the thickness of the second base film is greater than or equal to 1.02.

In any embodiment, the thickness of the first base film is 1 µm to 12 µm; and the thickness of the second base film is 1 µm to 12 µm.

In any embodiment, a mass ratio of the ceramic particles to the polymer particles in the intermediate layer is 1.5 to 4.

In any embodiment, an average particle size Dᵥ50 of the ceramic particles is 0.01 µm to 1 µm.

In any embodiment, an average particle size Dᵥ50 of the polymer particles is 0.01 µm to 1 µm.

In any embodiment, a thickness of the intermediate layer is greater than or equal to 0.3 µm.

In any embodiment, the thickness of the intermediate layer is 0.5 µm to 5 µm.

In any embodiment, a material of the ceramic particles includes one or a combination of two or more from the following group: boehmite (γ-AlOOH), aluminum oxide (Al₂O₃), barium sulfate (BaSO₄), magnesium oxide (MgO), magnesium hydroxide (Mg(OH)₂), silicon dioxide (SiO₂), tin dioxide (SnO₂), titanium oxide (TiO₂), calcium oxide (CaO), zinc oxide (ZnO), zirconium oxide (ZrO₂), yttrium oxide (Y₂O₃), nickel oxide (NiO), cerium oxide (CeO₂), zirconium titanate (ZrTiO₃), barium titanate (BaTiO₃), and magnesium fluoride (MgF₂).

In any embodiment, a melting point of the polymer particles is 200 to 260°C.

In any embodiment, a material of the polymer particles includes one or a combination of two or more from the following group: polycaprolactam (nylon 6), polyhexamethylene adipamide (nylon 66), polydodecanedioyl hexamethylenediamine (nylon 612), polysebacoyl decamethylenediamine (nylon 1010), polydecamethylene carboxamide (nylon 11), polydiphenyl ether sulfone, and polynonamethylene urea.

In any embodiment, the first base film and the second base film are each independently selected from at least one of polyolefin and derivatives thereof, halogenated polyolefin and derivatives thereof, polyether and derivatives thereof, polyether ether ketone and derivatives thereof, polyester and derivatives thereof, polyimide and derivatives thereof, polyvinyl alcohol and derivatives thereof, polytetrafluoroethylene and derivatives thereof, polyvinyl fluoride and derivatives thereof, polyvinylidene fluoride and derivatives thereof, and polyethylene terephthalate and derivatives thereof.

According to a second aspect, this application provides a preparation method of the separator, including: providing a slurry layer configured to form the intermediate layer on one surface of the first base film, where the slurry layer includes the ceramic particles, the polymer particles, and a solvent; arranging the second base film opposite to the slurry layer, and obtaining the separator after drying.

In any embodiment, the slurry layer is provided on the surface of the first base film through transfer coating, spin coating, or dip coating.

In any embodiment, the slurry layer further includes one or a combination of two or more of a binder, a dispersant, and a wetting agent.

According to a third aspect, this application provides a secondary battery, including a positive electrode plate, a negative electrode plate, an electrolyte, and a separator located between the positive electrode plate and the negative electrode plate; and the separator is the separator described in the first aspect of this application.

In any embodiment, the secondary battery is a lithium-ion battery or a sodium-ion battery.

In any embodiment, the secondary battery includes at least one of a battery cell, a battery module, or a battery pack.

According to a fourth aspect, this application provides an electric apparatus, including the secondary battery of the third aspect of this application.

Compared with the prior art, the beneficial effects of the technical solution of this application include:

This application forms a composite separator with a sandwich structure by providing an intermediate layer including ceramic particles and polymer particles between two layers of the separator, effectively preventing the problem of easy detachment of the ceramic particles and polymer particles. Furthermore, the separator provided by this application also exhibits good mechanical strength and is capable of pore closure under overheating conditions, significantly reducing the probability of thermal runaway under abnormal high-temperature conditions.

### BRIEF DESCRIPTION OF DRAWINGS

Persons of ordinary skill in the art can clearly understand various other advantages and benefits by reading the detailed description of the optional embodiments below. The accompanying drawings are merely intended to illustrate the preferred embodiments and are not intended to limit this application. Moreover, throughout the accompanying drawings, the same reference signs represent the same components. In the accompanying drawings:
FIG. 1 is a schematic diagram of a secondary battery according to an embodiment of this application;
FIG. 2 is an exploded view of the secondary battery according to the embodiment of this application in FIG. 1;
FIG. 3 is a schematic diagram of a battery module according to an embodiment of this application;
FIG. 4 is a schematic diagram of a battery pack according to an embodiment of this application;
FIG. 5 is an exploded view of the battery pack according to the embodiment of this application in FIG. 4; and
FIG. 6 is a schematic diagram of an electric apparatus using a secondary battery as a power source according to an embodiment of this application.

Description of reference signs:
1 battery pack; 2 upper box body; 3 lower box body; 4 battery module; 5 lithium-ion battery; 51 shell; 52 electrode assembly; and 53 top cover assembly.

### DESCRIPTION OF EMBODIMENTS

The following describes the embodiments of this disclosure in more detail with reference to the accompanying drawings. Although exemplary embodiments of this disclosure are illustrated in the accompanying drawings, it should be understood that this disclosure can be implemented in various forms and should not be limited by embodiments set forth herein. On the contrary, these embodiments are provided for a more thorough understanding of this disclosure and to fully convey the scope of this disclosure to persons skilled in the art.

"Ranges" disclosed in this application are defined in the form of a lower limit and an upper limit. A given range is defined by one lower limit and one upper limit selected, where the selected lower and upper limits define boundaries of that particular range. Ranges defined in this way may or may not include end values, and any combination may be used, meaning that any lower limit may be combined with any upper limit to form a range. For example, if ranges of 60-120 and 80-110 are provided for a specific parameter, it is understood that ranges of 60-110 and 80-120 can also be envisioned. In addition, if low limit values of a range are given as 1 and 2, and upper limit values of the range are given as 3, 4, and 5, the following ranges can all be envisioned: 1-3, 1-4, 1-5, 2-3, 2-4, and 2-5. In this application, unless otherwise stated, a value range of "a-b" is a short representation of any combination of real numbers between a and b, where both a and b are real numbers. For example, a value range of "0-5" means that all real numbers in the range of "0-5" are listed herein, and "0-5" is just a short representation of a combination of these values. In addition, a parameter expressed as an integer greater than or equal to 2 is equivalent to disclosure that the parameter is, such as, an integer among 2, 3, 4, 5, 6, 7, 8, 9, 10, 11, 12, and so on.

Unless otherwise specified, all the embodiments and optional embodiments of this application can be combined with each other to form new technical solutions.

Unless otherwise specified, all the technical features and optional technical features of this application can be combined with each other to form new technical solutions.

Unless otherwise specified, all the steps in this application can be performed sequentially or randomly, preferably, performed sequentially. For example, a method including steps (a) and (b) indicates that the method may include steps (a) and (b) performed sequentially or may include steps (b) and (a) performed sequentially. For example, the above method may further include step (c), indicating that step (c) may be added to the method in any ordinal position, for example, the method may include steps (a), (b), and (c), steps (a), (c), and (b), steps (c), (a), and (b), or the like.

Unless otherwise specified, "include" and "contain" mentioned in this application are inclusive or may be exclusive. For example, the terms "include" and "contain" can mean that other unlisted components may also be included or contained, or only listed components may be included or contained.

As an important component of a secondary battery, the separator serves to isolate the positive and negative electrodes of the battery. When a short circuit or other abnormality occurs in the secondary battery, voltage and internal temperature rise sharply, easily leading to melting and rupture of the separator, which may subsequently result in thermal runaway. In the prior art, a ceramic coating is often provided on a surface of the separator, so as to improve the thermal stability and mechanical strength of the separator. However, defects such as easy detachment of a ceramic layer and insufficient safety performance under abnormal high-temperature conditions still exist.

A composite separator with a sandwich structure is formed by providing an intermediate layer including ceramic particles and polymer particles between two layers of the separator, effectively preventing the problem of easy detachment of the ceramic particles and polymer particles. Furthermore, the separator provided by this application also exhibits good mechanical strength and is capable of pore closure under overheating conditions by the polymer melting into a non-porous film-like substance, significantly reducing the probability of thermal runaway under abnormal high-temperature conditions.

The technical solutions described in these embodiments of this application are applicable to a separator, as well as to the preparation method of the separator, a secondary battery using the separator, a battery module using the secondary battery, a battery pack using the secondary battery or battery module, and an electric apparatus using at least one of the secondary battery, battery module, and battery pack.

### Separator

According to a first aspect, this application provides a separator including a first base film, a second base film, and an intermediate layer. The intermediate layer is provided between the first base film and the second base film. The intermediate layer includes ceramic particles and polymer particles.

On one hand, since the thicknesses of the electrode plates change during the charging and discharging process of a battery, if a functional coating is provided on a surface of a separator base film facing the electrode plate, the coating on the surface of the separator is prone to detachment due to adhesion with the electrode plate. In this application, providing the intermediate layer containing the ceramic particles and polymer particles between the first base film and the second base film can effectively prevent the detachment of the ceramic particles and polymer particles.

On the other hand, this application uses granular polymer as a functional material for high-temperature pore closure, which has a higher packing density compared to fibrous polymer materials, thereby providing better high-temperature pore closure functionality, as well as advantages such as ease of thickness adjustment and excellent manufacturability. The ceramic particles help to enhance the heat resistance and puncture strength of the separator.

In some embodiments, a porosity of the first base film is greater than a porosity of the second base film.

The separator of this application includes two base films. If the porosities of the two base films are the same, when the two base films are stacked, the fibers of one base film are likely to clog the pores of another film. However, when the two base films have different porosities, the above clogging is less likely to occur, thereby facilitating good air permeability of the separator. The combination of base films with different porosities also helps to enhance the overall mechanical properties of the separator.

In this specification, porosity refers to the percentage of a pore volume in the base film relative to a total volume of the base film, which can be tested using methods known in the art, such as using a mercury intrusion porosimeter, with reference to GB/T 21650.1-2008.

In some embodiments, a ratio of the porosity of the first base film to the porosity of the second base film is greater than or equal to 1.02. For example, the ratio may be approximately 1.02, 1.05, 1.1, 1.12, 1.15, 1.2, 1.22, 1.25, 1.27, 1.3, 1.5, 1.7, 2, 2.3, 2.5, 2.8, 3, or the like.

When a slight difference exists between the porosity of the first base film and the porosity of the second base film, for example, a ratio of 1.02 or higher, a certain good technical effect can be achieved in improving the overall air permeability of the separator.

In some embodiments, the ratio of the porosity of the first base film to the porosity of the second base film is 1.05 to 2.5.

According to test results, when the ratio of the porosity of the first base film to the porosity of the second base film is 1.05 to 2.5, it is more conducive to improving overall performance including air permeability and mechanical strength.

In some embodiments, the porosity of the first base film is 30% to 80%. For example, the porosity may be approximately 30%, 35%, 40%, 45%, 50%, 55%, 60%, 65%, 70%, 75%, 80%, or the like.

In some embodiments, the porosity of the second base film is 30% to 70%. For example, the porosity may be approximately 30%, 35%, 40%, 45%, 50%, 55%, 60%, 65%, 70%, or the like.

In some embodiments, a pore size of the first base film and an average pore size of the second base film are the same or different; and each of the pore sizes is independently selected from 0.05 µm to 4 µm. For example, the pore size may be selected from 0.05 µm, 0.1 µm, 0.5 µm, 1 µm, 1.5 µm, 2 µm, 2.5 µm, 3 µm, 3.5 µm, 4 µm, and the like.

The pore size of the separator directly affects battery performance. For example, in a lithium-ion battery, if the pore size is too large, such as exceeding 4 µm, direct contact between the positive and negative electrodes or piercing of the separator by lithium dendrites may easily occur, leading to a short circuit. Conversely, if the pore size is too small, such as less than 0.05 µm, the movement of ions in an electrolyte solution may be inhibited, thereby increasing the internal resistance of the battery.

In some embodiments, a ratio of a thickness of the first base film to a thickness of the second base film is greater than or equal to 1.02. For example, the ratio may be approximately 1.02, 1.05, 1.1, 1.12, 1.15, 1.2, 1.22, 1.25, 1.27, 1.3, 1.5, 1.7, 2, 2.5, 3, 3.5, 4, 4.5, 5, or the like.

When the porosity of the first base film is greater than the porosity of the second base film, the thickness of the first base film is greater than the thickness of the second base film, so that the first base film having a relatively loose structure has a greater thickness, which is conducive to ensuring good mechanical strength of the separator.

In some embodiments, the ratio of the thickness of the first base film to the thickness of the second base film is 1.2 to 5.

According to test results, when the ratio of the thickness of the first base film to the thickness of the second base film is 1.2 to 5, it is more conducive to enhancing overall performance including air permeability and mechanical strength.

In some embodiments, the thickness of the first base film is 1 µm to 12 µm. For example, the thickness may be approximately 1 µm, 2 µm, 3 µm, 4 µm, 5 µm, 6 µm, 7 µm, 8 µm, 9 µm, 10 µm, 11 µm, 12 µm, or the like.

In some embodiments, the thickness of the second base film is 1 µm to 12 µm. For example, the thickness may be approximately 1 µm, 2 µm, 3 µm, 4 µm, 5 µm, 6 µm, 7 µm, 8 µm, 9 µm, 10 µm, 11 µm, 12 µm, or the like.

In some embodiments, a material of the first base film and a material of the second base film are each independently selected from at least one of polyolefin and derivatives thereof, halogenated polyolefin and derivatives thereof, polyether and derivatives thereof, polyether ether ketone and derivatives thereof, polyester and derivatives thereof, polyimide and derivatives thereof, polyvinyl alcohol and derivatives thereof, polytetrafluoroethylene and derivatives thereof, polyvinyl fluoride and derivatives thereof, polyvinylidene fluoride and derivatives thereof, and polyethylene terephthalate and derivatives thereof.

**In** some embodiments, the material of the first base film and the material of the second base film are different.

When the first base film and the second base film are made of different materials, due to the differences in materials, their mechanical properties and physical characteristics can complement each other, which is conducive to optimizing the overall performance of the separator.

**In** some embodiments, a mass ratio of the ceramic particles to the polymer particles in the intermediate layer is 1.5 to 4. For example, the mass ratio may be approximately 1.5, 1.8, 2, 2.2, 2.5, 2.7, 3, 3.3, 3.5, 3.8, 4, or the like.

The mass ratio of the ceramic particles to the polymer particles affects the high-temperature resistance and high-temperature pore closure performance of the separator. If there are too few ceramic particles and too many polymer particles (for example, the mass ratio of ceramic particles to polymer particles is less than 1.5), the high-temperature resistance of the separator may be insufficient, and the polymer particles may cause some clogging of the pores in the base film; and if there are too few polymer particles (for example, the mass ratio of ceramic particles to polymer particles is greater than 4), the high-temperature pore closure function of the separator is likely to be negatively affected.

In some embodiments, an average particle size Dᵥ50 of the ceramic particles is 0.01 µm to 1 µm. For example, the average particle size may be 0.01 µm, 0.02 µm, 0.05 µm, 0.1 µm, 0.15 µm, 0.2 µm, 0.25 µm, 0.3 µm, 0.4 µm, 0.5 µm, 0.6 µm, 0.7 µm, 0.8 µm, 0.9 µm, 1 µm, or the like.

If the average particle size of the ceramic particles is too large (for example, greater than 1 µm), the thickness consistency of the separator is affected, which is not conducive to increasing the energy density of the battery; and if the average particle size of the ceramic particles is too small (for example, less than 0.01 µm), pore clogging is likely to occur.

In some embodiments, an average particle size Dᵥ50 of the polymer particles is 0.01 µm to 1 µm. For example, the average particle size may be 0.01 µm, 0.02 µm, 0.05 µm, 0.1 µm, 0.15 µm, 0.2 µm, 0.25 µm, 0.3 µm, 0.4 µm, 0.5 µm, 0.6 µm, 0.7 µm, 0.8 µm, 0.9 µm, 1 µm, or the like.

If the average particle size of the polymer particles is too large (for example, greater than 1 µm), the thickness consistency of the separator is affected; and if the average particle size of the polymer particles is too small (for example, less than 0.01 µm), it is not conducive to achieving efficient pore closure.

In some embodiments, a thickness of the intermediate layer is greater than or equal to 0.3 µm. For example, the thickness may be approximately 0.3 µm, 0.5 µm, 0.8 µm, 1 µm, 1.5 µm, 2 µm, 2.5 µm, 3 µm, 3.5 µm, 4 µm, 4.5 µm, 5 µm, or the like.

The thickness of the intermediate layer is related to the heat resistance effect, and therefore, a thickness greater than 0.3 µm is required to ensure a relatively good high-temperature resistance effect.

In some embodiments, the thickness of the intermediate layer is 0.5 µm to 5 µm.

When the intermediate layer has a thickness of 0.5 µm to 5 µm, superior technical effects can be achieved in terms of heat resistance and air permeability of the separator. If the thickness is too large (for example, greater than 5 µm), the air permeability of the separator may be affected, thereby increasing the internal resistance of the battery.

In some embodiments, the intermediate layer further includes a binder.

In some embodiments, the binder includes one or a combination of two or more from the following group: polyacrylate, acrylic acid, and carboxymethyl cellulose.

In some embodiments, a material of the ceramic particles includes one or a combination of two or more from the following group: boehmite (γ-AlOOH), aluminum oxide (Al₂O₃), barium sulfate (BaSO₄), magnesium oxide (MgO), magnesium hydroxide (Mg(OH)₂), silicon dioxide (SiO₂), tin dioxide (SnO₂), titanium oxide (TiO₂), calcium oxide (CaO), zinc oxide (ZnO), zirconium oxide (ZrO₂), yttrium oxide (Y₂O₃), nickel oxide (NiO), cerium oxide (CeO₂), zirconium titanate (ZrTiO₃), barium titanate (BaTiO₃), and magnesium fluoride (MgF₂).

In some embodiments, a melting point of the polymer particles is 200 to 260°C.

When the polymer particles have the above melting point, if the battery temperature rises to the melting point due to a short circuit or other reasons, the separator provided by this application can achieve pore closure, reducing the probability of combustion or explosion of the battery.

In some embodiments, a material of the polymer particles includes one or a combination of two or more from the following group: polycaprolactam (nylon 6), polyhexamethylene adipamide (nylon 66), polydodecanedioyl hexamethylenediamine (nylon 612), polysebacoyl decamethylenediamine (nylon 1010), polydecamethylene carboxamide (nylon 11), polydiphenyl ether sulfone, and polynonamethylene urea.

### Preparation method of separator

According to a second aspect, this application provides a preparation method of the separator according to any embodiment of the first aspect of this application, including: providing a slurry layer configured to form the intermediate layer on one surface of the first base film, where the slurry layer includes the ceramic particles, the polymer particles, and a solvent; arranging the second base film opposite to the slurry layer, and obtaining the separator after drying.

In some embodiments, the slurry layer further includes one or a combination of two or more of a binder, a dispersant, and a wetting agent.

In some embodiments, the slurry layer further optionally includes the binder, where the binder includes one or a combination of two or more selected from the following group: polyvinylidene fluoride, styrene-butadiene emulsion, polybutyl acrylate, polyacrylic acid, polyisooctyl acrylate, methyl cyanoacrylate, polymethyl methacrylate, ethylene glycol dimethacrylate, polyacrylamide, and epoxy resin.

In some embodiments, the slurry layer further optionally includes the dispersant, where the dispersant includes one or a combination of two or more selected from the following group: sodium polyacrylate, sodium polymethacrylate, sodium polymethylbenzoate, sodium polymethylbenzenesulfonate, vinyl-modified polyether polyol, polycarboxylic acid-styrenemaleic anhydride copolymer, methacrylic acid-sodium maleate copolymer, ammonium acrylate salt, citrate, sodium hexametaphosphate, sodium tripolyphosphate, carboxymethyl cellulose, sodium carboxymethyl cellulose, lithium carboxymethyl cellulose, and polyvinyl alcohol.

In some embodiments, the slurry layer further optionally includes the wetting agent, where the dispersant includes one or a combination of two or more selected from the following group: sodium dodecylbenzenesulfonate, water-soluble azone, sodium butylnaphthalenesulfonate, and nonylphenol polyoxyethylene ether.

In some embodiments, the slurry layer is provided on the surface of the first base film through transfer coating, spin coating, or dip coating.

In some embodiments, the preparation method of the separator includes the following steps:
S1. Disperse the ceramic particles and the polymer particles in deionized water, optionally add one or a combination of two or more of a binder, a dispersant, and a wetting agent, and stir thoroughly to obtain a slurry.
S2. Apply the slurry to one surface of the first base film through transfer coating, spin coating, or dip coating to form a slurry layer on the first base film; before the slurry layer is completely dried, attach the second base film to a surface of the slurry layer on the first base film via a composite roller, and obtain the separator after drying.

### Secondary battery

According to a third aspect, this application provides a secondary battery, including the separator according to any embodiment of the first aspect of this application.

Typically, the secondary battery includes a positive electrode plate, a negative electrode plate, an electrolyte, and a separator. During the charging and discharging process of the battery, active ions are intercalated and deintercalated back and forth between the positive electrode plate and the negative electrode plate. The electrolyte conducts ions between the positive electrode plate and the negative electrode plate. The separator is disposed between the positive electrode plate and the negative electrode plate, primarily to prevent short circuits between the positive and negative electrodes while allowing ions to pass through.

In some embodiments, the secondary battery is a lithium-ion battery or a sodium-ion battery.

### [Positive electrode plate]

The positive electrode plate includes a positive electrode current collector and a positive electrode film layer provided on at least one surface of the positive electrode current collector. As an example, the positive electrode current collector includes two back-to-back surfaces in its thickness direction, and the positive electrode film layer is disposed on either one or both of the two back-to-back surfaces of the positive electrode current collector.

In some embodiments, the positive electrode current collector may be a metal foil current collector or a composite current collector. For example, a copper foil may be used as a metal foil. The composite current collector may include a polymer material substrate and a metal layer formed on at least one surface of the polymer material substrate. The composite current collector may be formed by forming a metal material (copper, copper alloy, nickel, nickel alloy, titanium, titanium alloy, silver, silver alloy, or the like) on a polymer material matrix (for example, matrices of polypropylene (PP), polyethylene terephthalate (PET), polybutylene terephthalate (PBT), polystyrene (PS), and polyethylene (PE)).

In some embodiments, the positive electrode film layer includes a positive electrode active material. When the positive electrode plate is used in a lithium-ion battery, the positive electrode active material may be a positive electrode active material known in the art for lithium-ion batteries. As an example, the positive electrode active material may include at least one of the following materials: olivine-structured lithium-containing phosphate, lithium transition metal oxide, and their respective modified compounds. However, this application is not limited to these materials, and may alternatively use other conventional materials that can be used as positive electrode active materials for batteries. One of these positive electrode active materials may be used alone, or two or more of them may be used in combination. Examples of lithium transition metal oxide may include, but are not limited to, at least one of lithium cobalt oxide (for example, LiCoO₂), lithium nickel oxide (for example, LiNiO₂), lithium manganese oxide (for example, LiMnO₂ and LiMn₂O₄), lithium nickel cobalt oxide, lithium manganese cobalt oxide, lithium nickel manganese oxide, lithium nickel cobalt manganese oxide (for example, LiNi_{1/3}Co_{1/3}Mn_{1/3}O₂ (NCM₃₃₃ for short), LiNi_{0.5}Co_{0.2}Mn_{0.3}O₂ (NCM₅₂₃ for short), LiNi_{0.5}Co_{0.25}Mn_{0.25}O₂ (NCM₂₁₁ for short), LiNi_{0.6}Co_{0.2}Mn_{0.2}O₂ (NCM₆₂₂ for short), LiNi_{0.8}Co_{0.1}Mn_{0.1}O₂ (NCM₈₁₁ for short), lithium nickel cobalt aluminum oxide (for example, LiNi_{0.85}Co_{0.15}Al_{0.05}O₂), and their modified compounds. Examples of olivine-structured lithium-containing phosphate may include, but are not limited to, at least one of lithium iron phosphate (for example, LiFePO₄ (LFP for short)), a composite material of lithium iron phosphate and carbon, lithium manganese phosphate (for example, LiMnPO₄), a composite material of lithium manganese phosphate and carbon, lithium manganese iron phosphate, and a composite material of lithium manganese iron phosphate and carbon.

In some embodiments, when the positive electrode plate is used in a sodium-ion battery, the positive electrode active material may be a positive electrode active material known in the art for sodium-ion batteries. As an example, one of these positive electrode active materials may be used alone, or two or more may be used in combination. The positive electrode active material may be selected from sodium-iron complex oxide (NaFeO₂), sodium-cobalt complex oxide (NaCoO₂), sodium-chromium complex oxide (NaCrO₂), sodium-manganese complex oxide (NaMnO₂), sodium-nickel complex oxide (NaNiO₂), sodium-nickel-titanium complex oxide (NaNi_{1/2}Ti_{1/2}O₂), sodium-nickel-manganese complex oxide (NaNi_{1/2}Mn_{1/2}O₂), sodium-iron-manganese complex oxide (Na_{2/3}Fe_{1/3}Mn_{2/3}O₂), sodium-nickel-cobalt-manganese complex oxide (NaNi_{1/3}Co_{1/3}Mn_{1/3}O₂), sodium-iron phosphate compound (NaFePO₄), sodium-manganese phosphate compound (NaMn_{P}O₄), sodium-cobalt phosphoric acid compound (NaCoPO₄), a Prussian blue material, a polyanionic material (phosphate, fluorophosphate, pyrophosphate, sulfate), and the like. However, this application is not limited to these materials, and this application may use other conventionally known materials that can be used as positive electrode active materials for sodium-ion batteries.

In some embodiments, the positive electrode film layer further optionally includes a binder. For example, the binder may include one or a combination of two or more from the following group: polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin.

In some embodiments, the positive electrode film layer further optionally includes a conductive agent. For example, the conductive agent may include one or a combination of two or more from the following group: Super P, acetylene black, carbon black, Ketjen black, carbon dots, carbon nanotubes, graphene, and carbon nanofibers.

In some embodiments, the positive electrode plate can be prepared as follows: Disperse the constituents for preparing the positive electrode film layer, such as the positive electrode active material, conductive agent, binder, and any other constituents, in a solvent (for example, N-methylpyrrolidone) to prepare a positive electrode slurry; apply the positive electrode slurry onto a composite current collector, and obtain the positive electrode plate after processes such as drying and cold pressing.

### [Negative electrode plate]

The negative electrode plate includes a negative electrode current collector and a negative electrode film layer disposed on at least one surface of the negative electrode current collector. As an example, the negative electrode current collector includes two back-to-back surfaces in its thickness direction, and the negative electrode film layer is disposed on either one or both of the two back-to-back surfaces of the negative electrode current collector.

In some embodiments, the negative electrode current collector may be a metal foil or a composite current collector. For example, a copper foil may be used as the metal foil. The composite current collector may include a polymer material substrate and a metal layer formed on at least one surface of the polymer material substrate. The composite current collector may be formed by forming a metal material (copper, copper alloy, nickel, nickel alloy, titanium, titanium alloy, silver, silver alloy, or the like) on a polymer material matrix (for example, matrices of polypropylene (PP), polyethylene terephthalate (PET), polybutylene terephthalate (PBT), polystyrene (PS), and polyethylene (PE)).

In some embodiments, the negative electrode film layer includes a negative electrode active material, and the negative electrode active material may be a negative electrode active material known in the art for batteries. For example, the negative electrode active material includes one or a combination of two or more from the following group: natural graphite, artificial graphite, mesocarbon microbeads (MCMB), hard carbon, soft carbon, silicon, a silicon-carbon composite, a Li-Sn alloy, a Li-Sn-O alloy, Sn, SnO, SnO₂, TiO₂-Li₄Ti₅O₁₂, and a Li-Al alloy. However, this application is not limited to these materials, and may alternatively use other conventionally known materials that can be used as negative electrode active materials for lithium-ion batteries. One of these negative electrode active materials may be used alone, or more than two of them may be used in combination.

In some embodiments, the negative electrode film layer further optionally includes a binder. For example, the binder may include one or a combination of two or more from the following group: styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally includes a conductive agent. For example, the conductive agent may include one or a combination of two or more from the following group: Super P, acetylene black, carbon black, Ketjen black, carbon dots, carbon nanotubes, graphene, and carbon nanofibers.

In some embodiments, the negative electrode film layer further optionally includes other additives. For example, the other additives may include a thickener (for example, sodium carboxymethyl cellulose (CMC-Na)).

In some embodiments, the negative electrode plate can be prepared as follows: Disperse the constituents for preparing the negative electrode film layer, for example, the negative electrode active material, conductive agent, binder, and any other constituents, in a solvent (for example, deionized water) to prepare a negative electrode slurry; apply the negative electrode slurry onto the negative electrode current collector, and obtain the negative electrode plate after processes such as drying and cold pressing.

### [Electrolyte]

The electrolyte conducts ions between the positive electrode plate and the negative electrode plate. The electrolyte is not limited to a specific type in this application, and can be selected based on needs. For example, the electrolyte may be selected from at least one of a solid electrolyte and a liquid electrolyte (that is, an electrolytic solution).

In some embodiments, the electrolyte is an electrolytic solution. The electrolytic solution includes an electrolytic salt and a solvent.

In some embodiments, the electrolytic salt may be selected from at least one of lithium hexafluorophosphate, lithium tetrafluoroborate, lithium perchlorate, lithium hexafluoroborate, lithium bis(fluorosulfonyl)imide, lithium bis-trifluoromethanesulfonimide, lithium trifluoromethanesulfonate, lithium difluorophosphate, lithium difluorooxalatoborate, lithium bisoxalatoborate, lithium difluorobisoxalate phosphate, and lithium tetrafluoro oxalate phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, methyl sulfonyl methane, ethyl methanesulfonate, and diethyl sulfone.

In some embodiments, the electrolytic solution further optionally includes additives. For example, the additives may include a negative electrode film-forming additive, and a positive electrode film-forming additive, or may include an additive capable of improving some performance of the battery, for example, an additive for improving overcharge performance of the battery, or an additive for improving high-temperature or low-temperature performance of the battery.

### [Separator]

The separator according to any embodiment of the first aspect of this application is used as the separator of the secondary battery.

### [Preparation of secondary battery]

The positive electrode plate, the negative electrode plate, and the separator can be made into an electrode assembly through a winding process or a lamination process, and then the wound is encapsulated in an outer package followed by injection of an electrolyte to prepare a secondary battery.

The outer package may be a hard shell, for example, a hard plastic shell, an aluminum shell, or a steel shell. The outer package may alternatively be a soft pack, for example, a pouch cell. A material of the soft pack may be plastic. As the plastic, polypropylene, polybutylene terephthalate, polybutylene succinate, and the like may be listed.

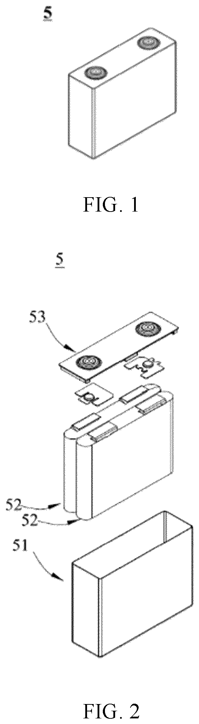

The secondary battery is not limited to a particular shape in this application, and may be cylindrical, rectangular, or of any other shapes. For example, FIG. 1 shows a secondary battery 5 of a rectangular structure as an example.

In some embodiments, referring to FIG. 2, the outer package may include a shell 51 and a cover plate 53. The shell 51 may include a base plate and side plates connected to the base plate, and the base plate and the side plates enclose an accommodating cavity. The shell 51 has an opening communicating with the accommodating cavity, and the cover plate 53 can cover the opening to close the accommodating cavity. The positive electrode plate, the negative electrode plate, and the separator can be formed into an electrode assembly 52 through a winding process or a lamination process. The electrode assembly 52 is packaged in the accommodating cavity. The electrolyte infiltrates the electrode assembly 52. One or more electrode assemblies 52 may be provided in the lithium-ion battery 5, and persons skilled in the art may make choices based on actual needs.

### Battery module and battery pack

In some embodiments, the secondary batteries can be assembled into a battery module, and the battery module may include one or more secondary batteries. The specific quantity of the secondary batteries may be chosen by persons skilled in the art based on use and capacity of the battery module.

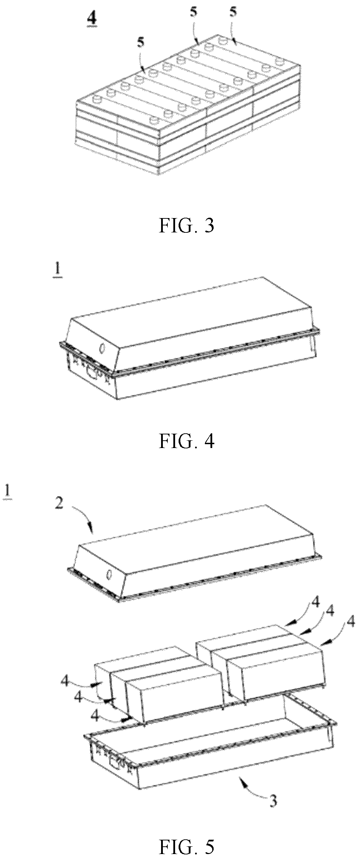

FIG. 3 shows a battery module 4 as an example. Referring to FIG. 3, in the battery module 4, a plurality of secondary batteries 5 may be sequentially arranged along a length direction of the battery module 4. Certainly, the battery cells may alternatively be arranged in any other manners. Further, the plurality of secondary batteries 5 may be fixed by fasteners.

Optionally, the battery module 4 may further include a housing with an accommodating space, and the plurality of secondary batteries 5 are accommodated in the accommodating space.

In some embodiments, the secondary batteries may also be assembled into a battery pack.

In some embodiments, the battery module 4 may also be assembled into a battery pack, and the battery pack may include one or more battery modules. The specific quantity of the battery modules may be chosen by persons skilled in the art based on use and capacity of the battery pack.

FIG. 4 and FIG. 5 show a battery pack 1 as an example. Referring to FIG. 4 and FIG. 5, the battery pack 1 may include a battery box and a plurality of battery modules 4 arranged in the battery box. The battery box includes an upper box body 2 and a lower box body 3. The upper box body 2 can cover the lower box body 3 to form an enclosed space for accommodating the battery modules 4. The plurality of battery modules 4 may be arranged in the battery box in any manner.

### Electric apparatus

This application further provides an electric apparatus. The electric apparatus includes the secondary battery provided in this application. In some embodiments, the electric apparatus includes at least one of the battery module or the battery pack provided by this application. The secondary battery, the battery module, or the battery pack may be used as a power source of the electric apparatus or as an energy storage unit of the electric apparatus. The electric apparatus may include a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite system, an energy storage system, or the like, but is not limited thereto.

The secondary battery, the battery module, or the battery pack may be selected for the electric apparatus depending on requirements for using the electric apparatus.

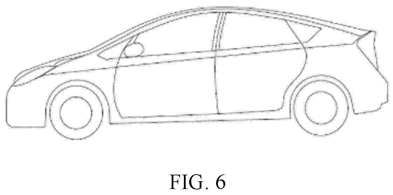

FIG. 6 shows an electric apparatus as an example. The electric apparatus is battery electric vehicle, a hybrid electric vehicle, a plug-in hybrid electric vehicle, or the like. To satisfy requirements of the electric apparatus for high power and high energy density of the secondary battery, a battery pack or a battery module may be used.

In another example, the apparatus may be a mobile phone, a tablet computer, a notebook computer, or the like. Such apparatus is generally required to be light and thin and may use a secondary battery as its power source.

### Example 1

A separator and a lithium-ion battery cell including the separator were prepared according to the following steps:

### I. Separator

(1) A first base film and a second base film were provided. A material of the first base film was polypropylene (PP), with a thickness of 6 µm, a porosity of 45%, and an average pore size of 0.4 µm; and a material of the second base film was polyethylene (PE), with a thickness of 5 µm, a porosity of 38%, and an average pore size of 0.2 µm.
(2) A slurry for forming an intermediate layer was prepared. Aluminum oxide particles (average particle size Dᵥ50 of 0.1 µm) and polycaprolactam particles (average particle size Dᵥ50 of 0.1 µm) were mixed at a mass ratio of 8:2 as functional particle materials; then, the functional particle materials, polymethyl methacrylate as a binder, and sodium carboxymethyl cellulose as a dispersant were dispersed in deionized water at a mass ratio of 9:0.5:0.5, and the mixture was thoroughly stirred to obtain a slurry. The functional particle materials accounted for 5% of the mass-volume percentage of the slurry.
(3) The slurry prepared in step (2) was applied onto one surface of the first base film by transfer coating to form a slurry layer on the first base film; before the slurry layer was completely dried, the second base film was attached to a surface of the slurry layer on the first base film via a composite roller, and a separator I-1 was obtained after drying. In the separator 1-1, a thickness of the intermediate layer was 2 µm.

The separator I-1 was used for the preparation of a lithium-ion battery cell II-1.

### II. Lithium-ion battery cell

### (1) Preparation of positive electrode plate

LiNi_{0.8}Co_{0.1}Mn_{0.1}O₂ as a positive electrode active material, superconducting carbon black SP as a conductive agent, and polyvinylidene fluoride (PVDF) as a binder were dispersed in N-methylpyrrolidone (NMP) as a solvent at a mass ratio of 96:2:2 and the resulting solution was mixed uniformly to obtain a positive electrode slurry, the positive electrode slurry was evenly applied onto a positive electrode current collector aluminum foil, followed by drying, cold pressing, slitting, and cutting to obtain a positive electrode plate.

### (2) Preparation of negative electrode plate

Graphite as a negative electrode active material, superconducting carbon black SP as a conductive agent, SBR as a binder, and CMC-Na as a thickener were dispersed in deionized water as a solvent at a mass ratio of 96:1:1:2 and the resulting solution was mixed uniformly to obtain a negative electrode slurry, the negative electrode slurry was evenly applied onto a negative electrode current collector copper foil, followed by drying, cold pressing, slitting, and cutting to obtain a negative electrode plate.

### (3) Separator

The separator I-1 prepared in the above steps was used.

### (4) Preparation of electrolyte

Ethylene carbonate (EC), dimethyl carbonate (DMC), and diethyl carbonate (DEC) were mixed uniformly at a volume ratio of 1:1:1 to obtain an organic solvent, and then a fully dried lithium salt LiPF₆ was dissolved in the mixed organic solvent to prepare an electrolyte with a concentration of 1 mol/L.

### (6) Preparation of battery cell

The positive electrode plate, the separator, and the negative electrode plate were stacked in sequence, so that the separator was located between the positive electrode plate and the negative electrode plate for separation, and then the stack was wound to obtain a bare cell, tabs were welded, and the bare cell was placed in an outer package, the electrolyte was injected into the dried cell, and processes such as packaging, standing, formation, and shaping were performed to obtain the lithium-ion battery II-1.

### Example 2

A separator I-2 and a lithium-ion battery II-2 containing the separator I-2 were prepared using the same steps as in Example 1, except for the following differences:
The porosities of both the first base film and the second base film were 60%.

### Example 3

A separator I-3 and a lithium-ion battery II-3 containing the separator I-3 were prepared using the same steps as in Example 1, except for the following differences:
The porosities of both the first base film and the second base film were 35%.

### Example 4

A separator I-4 and a lithium-ion battery II-4 containing the separator I-4 were prepared using the same steps as in Example 1, except for the following differences:
The thicknesses of the first base film and the second base film were the same, both being 6 µm.

### Example 5

A separator I-5 and a lithium-ion battery II-5 containing the separator I-5 were prepared using the same steps as in Example 1, except for the following differences:
The aluminum oxide particles were replaced with boehmite particles (with the same average particle size as the aluminum oxide particles in Example 1).

### Example 6

A separator I-6 and a lithium-ion battery II-6 containing the separator I-6 were prepared using the same steps as in Example 1, except for the following differences:
The polycaprolactam particles were replaced with polydodecanedioyl hexamethylenediamine particles (with the same average particle size as the polycaprolactam particles in Example 1).

### Example 7

A separator I-7 and a lithium-ion battery II-7 containing the separator I-7 were prepared using the same steps as in Example 1, except for the following differences:
The average particle size Dᵥ50 of both the aluminum oxide particles and the polycaprolactam particles was 1 µm.

### Example 8

A separator I-8 and a lithium-ion battery II-8 containing the separator I-8 were prepared using the same steps as in Example 1, except for the following differences:
A mass ratio of the aluminum oxide particles to the polycaprolactam particles was 3:2.

### Example 9

A separator I-9 and a lithium-ion battery II-9 containing the separator I-9 were prepared using the same steps as in Example 1, except for the following differences:
The mass ratio of the aluminum oxide particles to the polycaprolactam particles was 9:1.

### Example 10

A separator I-10 and a lithium-ion battery II-10 containing the separator I-10 were prepared using the same steps as in Example 1, except for the following differences:
The mass ratio of the aluminum oxide particles to the polycaprolactam particles was 1:1.

### Example 11

A separator I-11 and a lithium-ion battery II-11 containing the separator I-11 were prepared using the same steps as in Example 1, except for the following differences:
The thickness of the first base film was 10 µm, and the porosity was 43%.

### Example 12

A separator I-12 and a lithium-ion battery II-12 containing the separator I-12 were prepared using the same steps as in Example 1, except for the following differences:
The thickness of the first base film was 12 µm, and the porosity was 40%.

### Example 13

A separator I-13 and a lithium-ion battery II-13 containing the separator I-13 were prepared using the same steps as in Example 1, except for the following differences:
In the separator I-13, the thickness of the intermediate layer was 0.5 µm.

### Example 14

A separator I-14 and a lithium-ion battery II-14 containing the separator I-14 were prepared using the same steps as in Example 1, except for the following differences:
In the separator I-14, the thickness of the intermediate layer was 5 µm.

### Example 15

A separator I-15 and a lithium-ion battery II-15 containing the separator I-15 were prepared using the same steps as in Example 1, except for the following differences:
The intermediate layer was formed by sequentially applying ceramic particles and polymer particles, specifically as follows:
Aluminum oxide particles and polycaprolactam particles were weighed at a mass ratio of 8:2, the aluminum oxide particles, polymethyl methacrylate as a binder, and sodium carboxymethyl cellulose as a dispersant were dispersed in deionized water at a mass ratio of 9:0.5:0.5 and the mixture was thoroughly stirred to obtain a first slurry, where the aluminum oxide particles accounted for 35% of the mass-volume percentage of the first slurry. The polycaprolactam particles, polymethyl methacrylate as a binder, and sodium carboxymethyl cellulose as a dispersant were dispersed in deionized water at a mass ratio of 9:0.5:0.5 and the mixture was thoroughly stirred to obtain a second slurry, where the polycaprolactam particles accounted for 5% of the mass-volume percentage of the second slurry.

The first slurry was applied to one surface of the first base film by transfer coating onto form the first slurry layer on the first base film, after the first slurry layer was dried, the second slurry (with the same volume as the first slurry) was coated on the first slurry layer to form a second slurry layer, before the second slurry layer was completely dried, the second base film was attached to a surface of the second slurry layer via a composite roller, and the separator I-15 was obtained after drying. In the separator I-15, the thickness of the intermediate layer was 2 µm.

### Comparative Example 1

A single-layer base film was directly used, differing from the first base film in Example 1 in that the porosity was 43%. A lithium-ion battery containing the base film was prepared according to the steps in Example 1.

### Comparative Example 2

A separator and a lithium-ion battery containing the separator were prepared using the same steps as in Example 1, except for the following differences:
The slurry for preparing the intermediate layer did not include aluminum oxide particles and polycaprolactam particles.

That is, the separator provided in this comparative example was obtained by compounding the first base film and the second base film, without containing ceramic particles and polymer particles.

### Comparative Example 3

A separator and a lithium-ion battery containing the separator were prepared using the same steps as in Example 1, except for the following differences:
The slurry for preparing the intermediate layer did not include aluminum oxide particles.

### Comparative Example 4

A separator and a lithium-ion battery containing the separator were prepared using the same steps as in Example 1, except for the following differences:
The slurry for preparing the intermediate layer did not include polycaprolactam particles.

### Test Examples

The separators and lithium-ion battery cells prepared in the above examples and comparative examples were subjected to the following tests.

### (1) Separator air permeability

The separators from the above examples and comparative examples were taken, and air permeability test was carried out on those separators according to the following steps: Three pieces of the separator were cut from a film roll along a longitudinal direction at intervals of 150 mm, with a sample size of 100 mm × 100 mm. The separator was placed on a Japanese KRK Kumagai Oken-type air permeability tester suitable for the test range to measure the air permeability, and the average of three test results was taken as the air permeability of the separator. Then, the separators were placed on a glass plate, fixed on all sides with paper clips, and baked at 260°C for 1 hour, and the air permeability was tested again. A higher air permeability value indicates poorer air permeability, while a lower air permeability value indicates better air permeability.

### (2) High-temperature safety performance of battery

The battery cells from the above examples and comparative examples were placed in an oven at 260°C for 30 minutes. If the battery did not combust or explode, it indicates that the battery is not prone to combustion or explosion under high-temperature conditions, suggesting a lower probability of thermal runaway during use, and reflecting good high-temperature pore closure performance of the separator used in the battery.

### (3) Battery capacity retention rate

The capacity retention rates of the battery cells from the examples and comparative examples were tested according to the following steps: At 25°C, the battery was charged to 4.55 V at a constant current of 1C, then charged at a constant voltage of 4.55 V until the current dropped to 0.05C, and discharged to 2.5 V at a constant current of 1C to obtain a first-cycle discharge specific capacity (Cd1). This charging and discharging process was repeated for 100 cycles, and the discharge specific capacity after n cycles of the lithium-ion battery was recorded as (Cdn). Capacity retention rate = discharge specific capacity after n cycles / first-cycle discharge specific capacity.

### (4) Puncture strength

The puncture strengths of the separators from the examples and comparative examples were tested according to the following steps: In accordance with the national standard GB/T 10004-2008, a test piece with a width of 100 mm was mounted on a sample film fixing clamp ring, and a steel needle with a diameter of 1.0 mm and a tip radius of 0.5 mm was used to puncture the test piece at a speed of (50 ± 5) mm/min, the load at which the steel needle penetrated the test piece was recorded, and the average of five test points was taken.

The test results were shown in Table 1.

**Table 1 Test results of separators and battery cells**

| | Separator air permeability (sec /100s) | | Explosion during high-temperature baking | Capacity retention rate | Puncture strength (gf) |
|---|---|---|---|---|---|
| | Before baking | After baking | | | |
| Example 1 | 210 | 8500 | No | 97% | 485 |
| Example 2 | 190 | 5000 | No | 97% | 455 |
| Example 3 | 250 | 8000 | No | 95% | 475 |
| Example 4 | 220 | 8500 | No | 96% | 490 |
| Example 5 | 200 | 8000 | No | 96% | 470 |
| Example 6 | 230 | 7800 | No | 95% | 475 |
| Example 7 | 260 | 5000 | No | 93% | 490 |
| Example 8 | 300 | 12000 | No | 92% | 465 |
| Example 9 | 200 | 3500 | No | 96% | 550 |
| Example 10 | 350 | 13500 | No | 91% | 430 |
| Example 11 | 225 | 8500 | No | 95% | 465 |
| Example 12 | 235 | 8200 | No | 94% | 470 |
| Example 13 | 198 | 3000 | No | 95% | 400 |
| Example 14 | 320 | 10500 | No | 93% | 650 |
| Example 15 | 230 | 8500 | No | 95% | 490 |
| Comparative Example 1 | 160 | / | Yes | 83% | 200 |
| Comparative Example 2 | 200 | / | Yes | 85% | 265 |
| Comparative Example 3 | 210 | / | Yes | 87% | 275 |
| Comparative Example 4 | 215 | / | Yes | 90% | 300 |

| | | | | | |
|---|---|---|---|---|---|
| Note: The separators of Comparative Examples 1 to 4 exhibited significant wrinkling after baking at 260°C for 1 hour. Therefore, their air permeability values after baking were not tested. | | | | | |

The above content is merely specific implementations of this application, but is not intended to limit the protection scope of this application. Any variation or replacement readily figured out by persons skilled in the art within the technical scope disclosed in this application shall fall within the protection scope of this application. Therefore, the protection scope of this application shall be subject to the protection scope of the claims.

## Claims

1. A separator, **characterized by** comprising a first base film, a second base film, and an intermediate layer; wherein the intermediate layer is provided between the first base film and the second base film; and the intermediate layer comprises ceramic particles and polymer particles.

2. The separator according to claim 1, **characterized in that** a porosity of the first base film is greater than a porosity of the second base film.

3. The separator according to claim 2, **characterized in that** a ratio of the porosity of the first base film to the porosity of the second base film is greater than or equal to 1.02;
optionally, the porosity of the first base film is 30% to 80%; and
optionally, the porosity of the second base film is 30% to 70%.

4. The separator according to any one of claims 1 to 3, **characterized in that** a thickness of the first base film is greater than a thickness of the second base film.

5. The separator according to claim 4, **characterized in that** a ratio of the thickness of the first base film to the thickness of the second base film is greater than or equal to 1.02;
optionally, the thickness of the first base film is 1 µm to 12 µm; and
optionally, the thickness of the second base film is 1 µm to 12 µm.

6. The separator according to any one of claims 1 to 5, **characterized in that** a mass ratio of the ceramic particles to the polymer particles is 1.5 to 4.

7. The separator according to any one of claims 1 to 5, **characterized in that** an average particle size Dᵥ50 of the ceramic particles is 0.01 µm to 1 µm; and
optionally, an average particle size Dᵥ50 of the polymer particles is 0.01 µm to 1 µm.

8. The separator according to any one of claims 1 to 7, **characterized in that** a material of the ceramic particles comprises one or a combination of two or more from the following group: boehmite, aluminum oxide, barium sulfate, magnesium oxide, magnesium hydroxide, silicon dioxide, tin dioxide, titanium oxide, calcium oxide, zinc oxide, zirconium oxide, yttrium oxide, nickel oxide, cerium oxide, zirconium titanate, barium titanate, and magnesium fluoride.

9. The separator according to any one of claims 1 to 7, **characterized in that** a material of the polymer particles comprises one or a combination of two or more from the following group: polycaprolactam, polyhexamethylene adipamide, polydodecanedioyl hexamethylenediamine, polysebacoyl decamethylenediamine, polydecamethylene carboxamide, polydiphenyl ether sulfone, and polynonamethylene urea.

10. The separator according to any one of claims 1 to 9, **characterized in that** a thickness of the intermediate layer is greater than or equal to 0.3 µm; and
optionally, the thickness of the intermediate layer is 0.5 µm to 5 µm.

11. A preparation method of the separator according to any one of claims 1 to 10, **characterized by** comprising: providing a slurry layer configured to form the intermediate layer on one surface of the first base film, wherein the slurry layer comprises the ceramic particles, the polymer particles, and a solvent; arranging the second base film opposite to the slurry layer; and obtaining the separator after drying.

12. A secondary battery, comprising a positive electrode plate, a negative electrode plate, an electrolyte, and a separator located between the positive electrode plate and the negative electrode plate, **characterized in that** the separator is the separator according to any one of claims 1 to 10.

13. An electric apparatus, **characterized by** comprising the secondary battery according to claim 12.
